# EUROPEAN PATENT SPECIFICATION

(11) **EP 0 433 613 B1**
(45) Date of publication and mention of the grant of the patent: **20.07.1994**
(21) Application number: 90120608.6
(22) Date of filing: 26.10.1990
(51) Int. Cl.: G02B 21/04, G02B 21/00, G02B 17/06

(54) **Microscopic spectrometer with Cassegrain objective**
Mikroskop-Spektrometer mit Cassegrain-Objektiv
Spectromètre microscopique avec objectif du type Cassegrain

(30) Priority: 03.11.1989 JP 286891/89
(43) Date of publication of application: 26.06.1991
(73) Proprietor: HORIBA, LTD., Minami-ku Kyoto (JP)
(72) Inventor: Ukon, Juichiro, Ibaraki-city, Osaka (JP)
(74) Representative: TER MEER STEINMEISTER & PARTNER GbR

(56) References cited:
- EP-A- 0 116 321
- DE-A- 2 462 110
- GB-A- 2 119 117

## Description

### Field of the Invention

The present invention relates to a microscopic spectrometer as claimed in the preamble of claim 1.

### Description of the Prior Art

In general, a lens system utilizing a refractive operation is applied in an optics of a microscopic spectrometer. However, in a wavelength range (for example in a range from soft X-rays to ultraviolett rays or infrared rays) where such a lens system cannot be used a Schwarzschild-type Cassegrain objective (hereinafter referred to as Cassegrain objective) comprising two pieces of spherical mirrors joined together has to be applied as an objective.

On the other hand, when measuring an electromagnetic wave within said wavelength range, in particular in a measurement of the spectrum, in order to avoid the mingling of optical information about an object to be measured, a shading mask is placed in an image plane of an objective in order to limit said object to be measured according to circumstances. However, in such a case, no detecting element can be placed in said image plane. Therefore, it is necessary to position said detecting element in a distance from said image plane and to guide information about the image plane to said detecting element through a relay optics.

However, a Schwarzschild-type Cassegrain mirror system using reflecting mirrors is also used in said relay optics. Moreover, for example, in an infrared microscopic spectrometer a Hg-Cd-Te crystal can be used as a detecting element. However, the sensitivity of said detecting element of this type is increased in inverse proportion to the volume thereof, so that it is miniaturized as far as possible. Accordingly, the relay optics is constructed in the form of an optics contractedly projecting an image onto said detecting element.

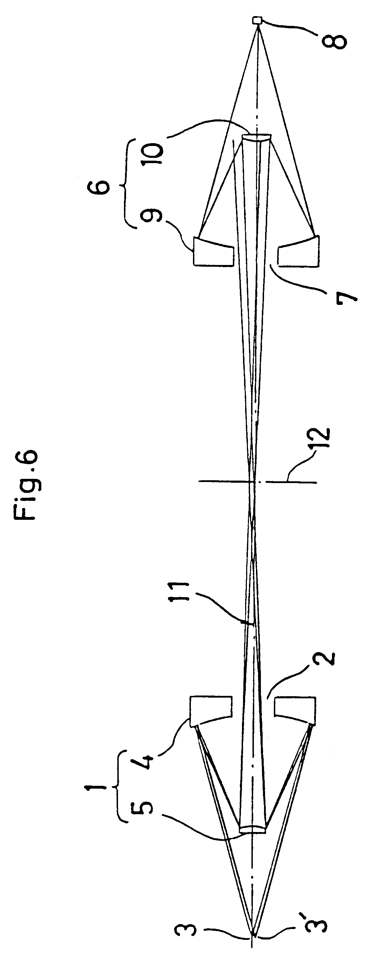

Referring to Fig. 6 showing one example of the conventional microscopic spectrometer, reference numeral 1 designates a Cassegrain objective, said Cassegrain objective 1 being composed of a main mirror 4 comprising an opening 2 at a central portion thereof and a concave surface facing to an object 3, and of a secondary mirror 5 comprising a convex mirror surface. Said secondary mirror 5 is positioned between said main mirror 4 and said object 3 so that the convex mirror surface may face to the concave mirror surface of the main mirror 4. Reference numeral 6 designates a relay optics comprising a Cassegrain objective system (hereinafter referred to as Cassegrain objective relay optics) having a Cassegrain mirror provided behind the Cassegrain objective 1. Said Cassegrain relay optics 6 being composed of a main mirror 9 comprising a concave mirror surface and an opening 7 at a central portion thereof. Said main mirror 9 is placed on the side closer to the main mirror 4 of the Cassegrain objective 1 such that its concave mirror surface may face to a detecting element 8. Further, a secondary mirror 10 of the optics 6 comprises a convex mirror surface and is positioned between said main mirror 9 and said detecting element 8 such that its convex mirror surface may face to the main mirror 9 and said secondary mirror 5 of the Cassegrain objective 1. In addition, referring to Fig. 6, reference numeral 11 designates an optical axis and reference numeral 12 designates an image plane of the Cassegrain objective 1.

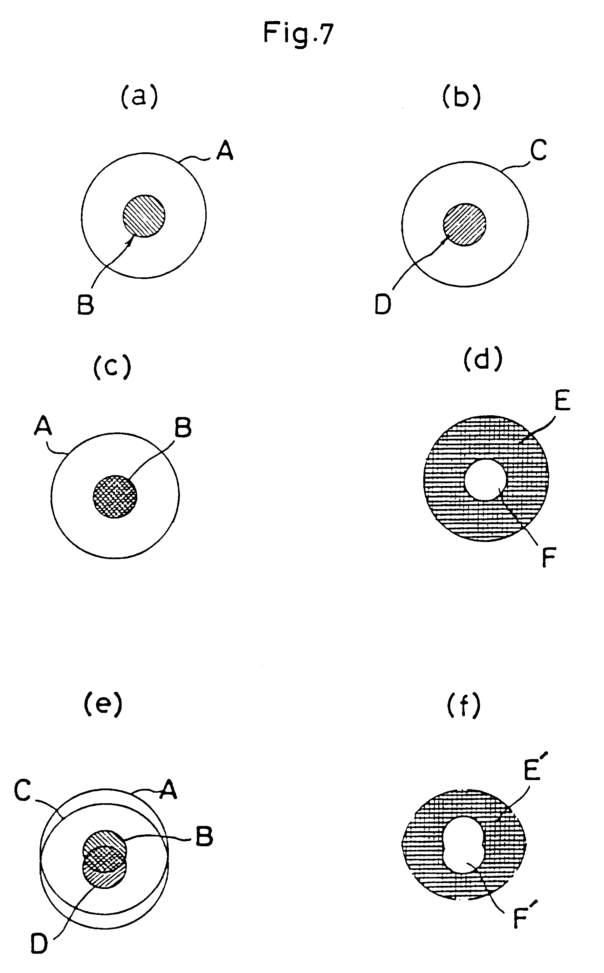

However, in the above-described Cassegrain objective 1 in general the secondary mirror 5 serves as a pupil surface and a light going toward the main mirror 4 from the object 3 is shaded by means of the secondary mirror 5, so that a beam on the pupil surface has a hollow shape having no beam portion in a central part thereof, as shown in Fig. 7(a). Referring to Fig. 7(a), A designates a diameter of the pupil of the Cassegrain objective 1 and B designates a diameter of a beam shaded by means of the secondary mirror 5. The same situation occurs also in the Cassegrain relay optics 6 (refer to Fig. 7(b)). That is to say, referring to Fig. 7(b), C designates a diameter of the pupil of the Cassegrain relay optics 6 and D designates a diameter of a beam shaded by means of the secondary mirror 10.

Accordingly, in order to efficiently transmit a beam emitted from the object 3 onto the detecting element 8 by joining the Cassegrain objective 1 with the Cassegrain relay optics 6, it is necessary that the pupils A, C in these two optics 1, 6 coincide with each other in size and shading coefficient. Consequently, in the conventional microscopic spectrometer of this type a Cassegrain mirror having a shape same as that of an objective (adjusted so that $\text{A= C}$ and $\text{B = D}$ may hold good in the above-described example) or similar to that of the objective has to be used in the relay optics in order to obtain a good pupil adaptability.

However, merely in the case where the object 3 exists on the optical axis 11 the adaptability can be given to the pupil by such a measure in the optics. As shown by reference numeral 3′ in Fig. 6, in the case where an object 3′ does not exist on the optical axis 11, a beam emitted from said object 3′ cannot be efficiently focused into an image on the detecting element 8. In addition, in the case where an objective different in magnification and numerical aperture is used, if the pupil is different in size and shading coefficient, also a beam emitted from the object 3 existing on the optical axis 11 is shaded on account of a difference of the relay optics in shading coefficient or, for example, a part of the beam gets out of the secondary mirror and thus the beam cannot be efficiently transmitted. This will be described below with reference to Fig. 7.

Fig. 7 shows the shape of the pupil in the Cassegrain objective 1 and the Cassegrain relay optics 6 in the microscopic spectrometer having the construction shown in Fig. 6 and an effective beam in the case where the object exists on the optical axis 11 and in the case where the object does not exist on the optical axis 11.

That is to say, Figs. 7(a), (b) show the shape of the pupil in the Cassegrain objective 1 and the Cassegrain relay optics 6, as above described. Further, since $\text{A = C}$ and $\text{B = D}$ hold good, as already described, the projection of the pupil of the Cassegrain objective 1 onto the pupil of the Cassegrain relay optics 6 when the pupils A, C for the object 3 existing on the optical axis 11 are overlapped one upon another is shown in Fig. 7(c) and the effective beam transmitted to the detecting element 8 is shown in Fig. 7(d). In this Fig. 7(d), a lattice portion E shows the effective beam and a white portion F shows the shaded portion. On the other hand, when the pupils A, C for the object 3′, which does not exist on the optical axis 11, are overlapped one upon another, the projection of the pupil of the Cassegrain objective 1 onto the pupil of the Cassegrain optics 6 is shown in Fig. 7(e) and the effective beam transmitted to the detecting element 8 is shown in Fig. 7(f). In this Fig. 7(f), a lattice portion E′ shows the effective beam but this lattice portion E′ is considerably narrower than said lattice portion E. In addition, a white portion F′ is considerably wider than said white portion F.

In short, it has been found that the beam emitted from the object 3′ cannot be efficiently focused into an image on the detecting element 8 in the case where the object 3′ does not exist on the optical axis 11.

Of course, it is possible to use a paraboloid mirror and an ellipsoid mirror for solving this adaptability of the pupils in place of the above-described Cassegrain relay optics 6.

However, since the relay optics serves to transmit the beam from the Cassegrain objective 1 to the detecting element 8, the numerical aperture on the side of the image of the relay optics must be the same as that of the objective or more. On the other hand, as already described, the smaller the detecting element 8 is, the more advantageous it is, so that the contraction factor of the relay optics has to be small.

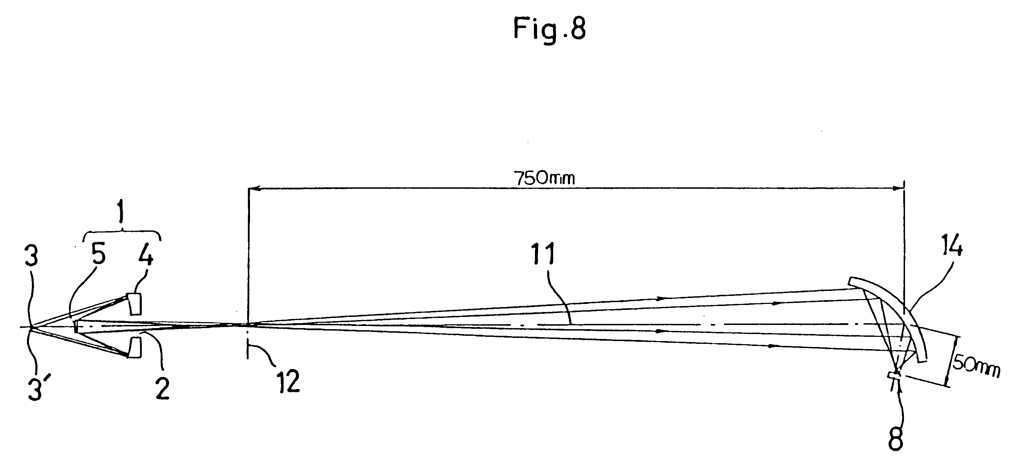

For example, provided that the diameter of the detecting element 8 is 250 µm, the diameter of the maximum measuring field of view becomes 250 µm, the magnification of the Cassegrain objective is 15, the numerical aperture on the side of the object 0.3, the numerical aperture on the side of the image of the Cassegrain objective 1 0.02 and the diameter of the image becomes 3.75 mm. If it is intended to receive the beam from the Cassegrain objective 1 by means of the ellipsoid mirror 14 shown in Fig. 8 in order to focus the image onto the detecting element 8, the contraction factor is 1/15 in the case where a focal distance on the side of the short focus of the eccentric ellipsoid mirror 14 is 50 mm, so that a focal distance on the side of the long focus becomes 750 mm. In addition, provided that an angle formed between the main ray of the beam running from the pupil of the Cassegrain objective 1 to the image plane 12 for forming the highest image (125 µm on the object 3) and the optical axis is 0.5°, a height of the main ray on the ellipsoid mirror 14 becomes about 6.5 mm. In this case, the numerical aperture is 0.02, so that the diameter of the beam from this object 3 becomes about 30 mm and thus the effective diameter required for the ellipsoid mirror 14 becomes 43 mm or more so, that the apparatus is large-sized. Further, the focal distance on the side of the long focus of the ellipsoid mirror 14 is increased with the reduction of the contraction factor of the ellipsoid mirror 14 so that the dimension of the spectrometer increases as a whole and particularly in the case of the infrared microscope, a disadvantage occurs in that the light from the Cassegrain objective 1 is absorbed by carbonic acid gas and steam within an air in the optical path, so that the use of the ellipsoid mirror 14 is not preferable. Furthermore, also in microscopes other than the infrared microscope, the use of the ellipsoid mirror 14 is not preferable in view of the miniaturization of the apparatus.

Besides, it has been considered to use a paraboloid mirror in place of the above described ellipsoid mirror 14. However, according to the above described example, two paraboloid mirrors having the focal distances of 750 mm and 50 mm become necessary and thus the same problems as in the case where the ellipsoid mirror 14 is used, occur.

### SUMMARY OF THE INVENTION

The present invention has been achieved paying attention to the above described matters, and it is an object of the present invention to provide a microscopic spectrometer capable of efficiently transmit not only a beam from an object existing on an optical axis but also a beam from an object, which does not exist on the optical axis, to a detecting element without using a large-sized relay optics.

In order to achieve the above described object, a microscopic spectrometer according to the present invention is characterized by the features of claim 1.

In the microscopic spectrometer according to the present invention having the above-described characteristic construction, since the central obstruction ratio in the inverse placed telescope as the relay optics is smaller than that in the Cassegrain objective, also as for a beam from an object having an increased angle of view for the Cassegrain objective, a quantity of the beam masked by masking the inverse placed telescope is reduced and thus the beam can be efficiently transmitted to the detecting element. In addition, the microscopic spectrometer according to the present invention can cope also with a Cassegrain objective different in magnification and numerical aperture because of the reduced central obstruction ratio in the inverse placed telescope and thus the beam can be efficiently transmitted to the detecting element.

### BRIEF DESCRIPTION OF THE DRAWINGS

Fig. 1 is a block diagram showing a microscopic spectrometer according to one preferred embodiment of the present invention;
Figs. 2 and 3 are diagrams showing a relation between a pupil of a Cassegrain objective on the one hand and a pupil of an inverse placed Cassegrain telescope on the other hand and an effective beam in the case where an object exists on an optical axis and in the case where an object does not exist on an optical axis in the apparatus shown in Fig. 1;
Fig. 4 and Fig. 5 are block diagrams showing microscopic spectrometers according to further preferred embodiments of the present invention, respectively;
Fig. 6 is a block diagram showing the conventional microscopic spectrometer;
Fig. 7 is a diagram showing a relation between a pupil of a Cassegrain objective on the one hand and a pupil of an inverse placed Cassegrain telescope on the other hand and an effective beam in the case where an object exists on an optical axis and in the case where an object does not exist on an optical axis in the apparatus shown in Fig. 6; and
Fig. 8 is a block diagram showing a further conventional microscopic spectrometer.

### DESCRIPTION OF THE PREFERRED EMBODIMENTS

The preferred embodiments of the present invention will be described below with reference to the drawings. In the following description some one reference numerals as in Figs. 6 to 8 designate members same one as or equivalent to those in Figs. 6 to 8.

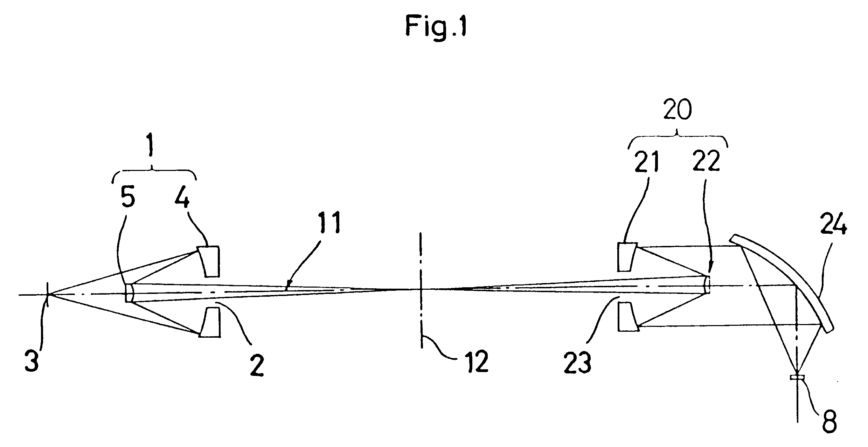

Referring now to Fig. 1 showing a construction of a microscopic spectrometer according to one preferred embodiment of the present invention, reference numeral 20 designates an inverse placed Cassegrain telescope as a relay optics placed behind an image plane 12 of a Cassegrain objective 1. Here, an inverse placed telescope is a telescope having an arrangement opposite to that in the usual telescope. Said image plane is placed at a position corresponding to a focal distance of the telescope in order to obtain a beam emitted from said image plane in the form of parallel rays. In the preferred embodiment shown, the Cassegrain telescope is inversely arranged.

Said Cassegrain telescope 20 is composed of a main mirror 21 comprising a concave mirror surface having a positive focal distance and of a secondary mirror 22 comprising a convex mirror surface having a negative focal distance, said main mirror 21 being provided with an opening 23 formed in a central portion thereof. The concave mirror surface of the main mirror 21 facing in the direction opposite to the Cassegrain objective 1. In addition, said secondary mirror 22 is provided so as to face its convex mirror surface in the direction of said concave mirror surface of the main mirror 21 and the Cassegrain objective 1. Additionally, the secondary mirror 22 is positioned slightly closer to the main mirror 21 in comparison to the focus of the main mirror 21. Accordingly, a beam from the secondary mirror 5 of the Cassegrain objective 1 is reflected in the direction of the main mirror 21 by the secondary mirror 22 of the inverse placed Cassegrain telescope 20 and a beam incident upon the main mirror 21 is emitted from the main mirror 21 in the form of parallel beams.

Reference numeral 24 designates a paraboloid mirror placed behind said inverse placed Cassegrain telescope 20, and a detecting element 8 is placed at a focal position of said paraboloid mirror 24. Accordingly, said parallel rays from the inverse placed Cassegrain telescope 20 are converged by said paraboloid mirror 24 to be incident upon the detecting element 8, whereby focussed into an appointed image on the detecting element 8.

In the microscopic spectrometer having the above-described construction, the beam emitted from the object 3 is incident upon the main mirror 4 of the Cassegrain objective 1, however, a part of said beam is masked by the secondary mirror 5 as the pupil in this time. The masking coefficient or central obstruction ratio to the beam in this secondary mirror 5 is large to an extent of 0.3 to 0.4 in the Schwartzschild-type Cassegrain objective 1. The beam reflected by the main mirror 4 is reflected by the secondary mirrors 5 to be focused into an image on the image plane 12 of the Cassegrain objective 1.

Further, the beam, which has transmitted through the image plane 12, is incident upon the secondary mirror 22 of theinverse placed Cassegrain telescope 20 and the beam reflected by the convex mirror surface of the secondary mirror 22 is incident upon the main mirror 21 to be emitted from the main mirror 21 in the form of parallel rays. These parallel rays are converged by the paraboloid mirror 24 to be focused into an image, which is smaller than that on the image plane 12 of the Cassegrain objective 1, on the image plane of the detecting element 8.

However, in the inverse placed Cassegrain telescope 20, the secondary mirror 22 is its pupil and the central obstruction ratio of this secondary mirror 22 is set so as to be smaller than that in the secondary mirror 5 of the Cassegrain objective 1, for example 0.3 or less. At the same time, the setting is conducted so that such relations that a central obstruction ratio in said Cassegrain objective 1 is larger than that in the inverse placed telescope 20, that a diameter of an image of a pupil of the Cassegrain objective 1 projected onto a secondary mirror as a pupil of the inverse placed telescope 20 being same as a diameter of said secondary mirror of the inverse placed telescope 20 or smaller, and that an image of a beam-masking diameter of the Cassegrain objective 1 projected on the secondary mirror as said pupil of the inverse placed telescope 20 being same as a beam-masking diameter of the inverse placed telescope 20 or larger, may hold good between the Cassegrain objective 1 and the inverse placed telescope 20. Thus, also for a beam from the object 3′ having a large angle of view for the Cassegrain objective 1, the quantity of the beam masked with the inverse placed Cassegrain telescope 20 is reduced and thus the beam can be efficiently transmitted to the detecting element 8. In addition, the microscopic spectrometer according to the present invention can cope also with the Cassegrain objective 1 different in magnification and numerical aperture on the side of the object and thus can efficiently transmit the beam.

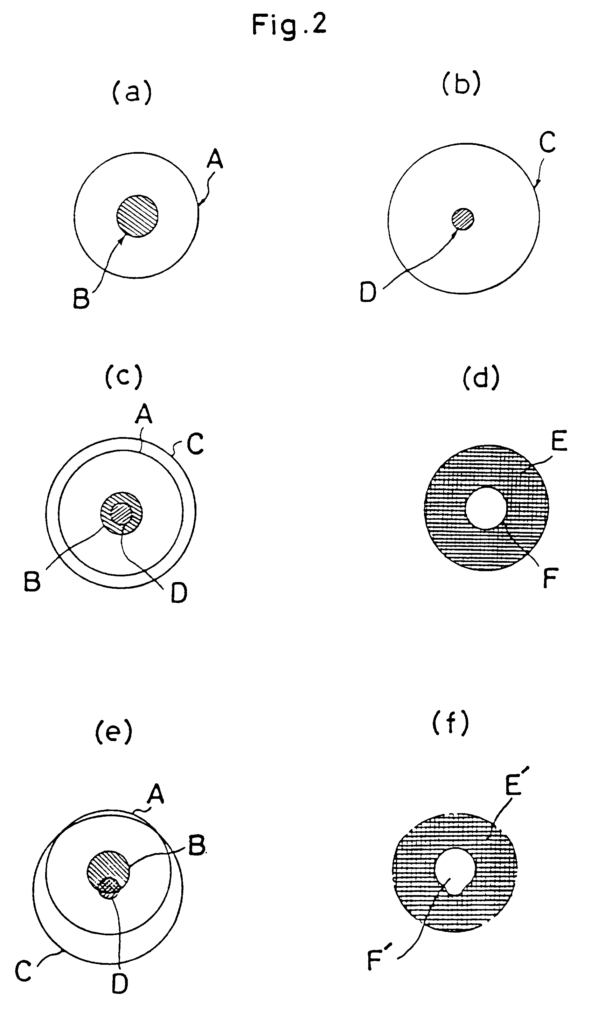

Fig. 2 shows a relation between the Cassegrain objective 1 and the inverse placed Cassegrain telescope 20 in pupil and an effective beam in the case where the object exists on the optical axis 11 when the above-described setting has been conducted.

That is to say, the shapes of the pupils of the Cassegrain objective 1 and the Cassegrain inverse telescope 20 are shown in Figs. 2(a), (b), and the projection of the pupil of the Cassegrain objective 1 onto the pupil of the inverse placed Cassegrain telescope 20 in the case where the pupils A, C for the object 3 existing on the optical axis 11 are overlapped one upon another is shown in Fig. 2(c). The effective beam on the pupil of the inverse placed Cassegrain telescope 20 of the Cassegrain objective 1 in this time is shown in Fig. 2(d). Since the central obstruction ratio in the inverse placed Cassegrain telescope 20 is smaller than that in the Cassegrain objective 1, the effective beam E has the same size as that shown in Fig. 7(d). On the other hand, the projection of the pupil of the Cassegrain objective 1 onto the inverse placed Cassegrain telescope 20 in the case where the pupils A, C for the object 3′, which does not exist on the optical axis 11, are overlapped one upon another is shown in Fig. 2(e). As above described, since the central obstruction ratio in the inverse placed Cassegrain telescope 20 is smaller than that in the Cassegrain objective 1, the effective beam E′ at this time shown in Fig. 2(f) is larger than that shown in Fig. 7(f).

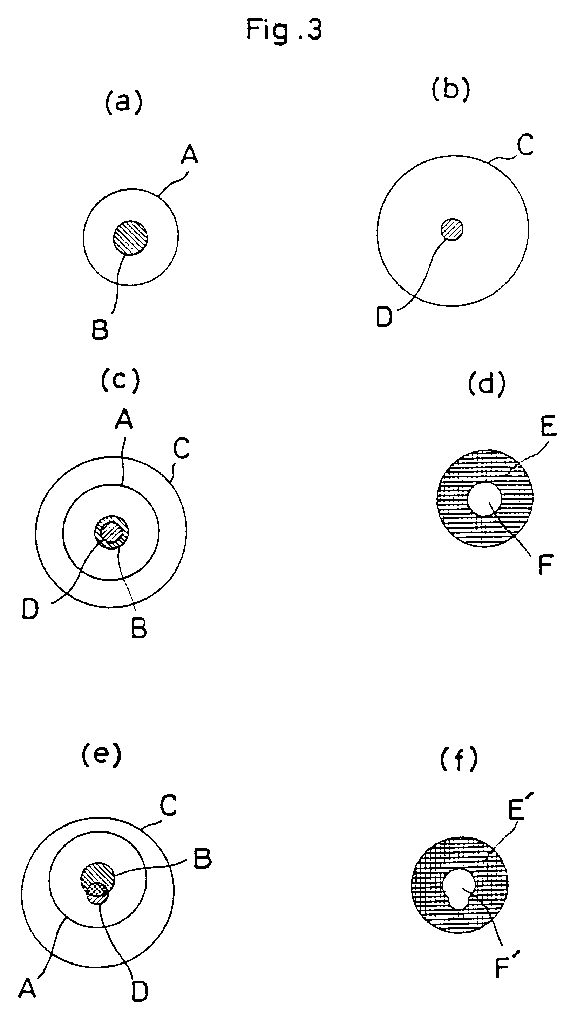

In addition, in the case where the magnification and the numerical aperture of the Cassegrain objective 1 are changed, in general the size of the pupil is changed but the masking coefficient is hardly changed. The projection of the pupil of the Cassegrain objective 1 onto the inverse placed Cassegrain telescope 20 and the effective beam at this time are shown in Fig. 3(a) to (f). The respective drawings (a) to (f) in Fig. 3 correspond to the respective drawings (a) to (f) in Fig. 2. And, in the preferred embodiment shown in Fig. 3, a diameter of a masked portion in an external form of the pupil of the Cassegrain objective 1 is reduced but the masking diameter in the pupil of the inverse placed Cassegrain telescope 20 is smaller than the diameter of the masked portion in an external form of the pupil of the Cassegrain objective 1, so that the beam from the object 3 existing on the optical axis 11 or the object 3′, which does not exist on the optical axis 11, is not greatly masked.

As above described, in the preferred embodiments, not only the beam from the object 3 existing on the optical axis 11, but also the beam from the object 3′, which does not exist on the optical axis 11, can be efficiently transmitted to the detecting element 8. And, since the focal distance of the inverse placed Cassegrain telescope 20 is small, a distance between the Cassegrain objective 1 and the inverse placed Cassegrain telescope 20 is reduced and thus the microscopic spectrometer can be miniaturized.

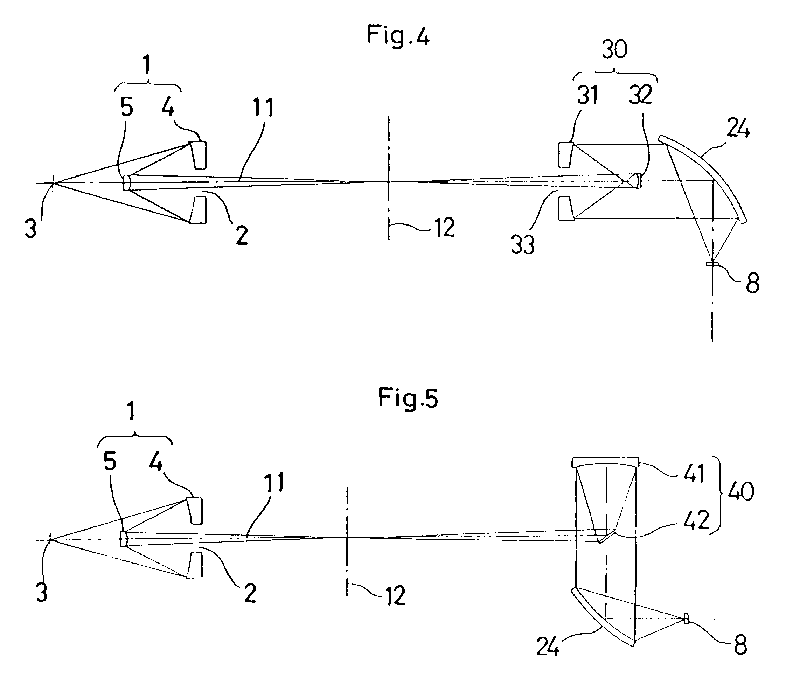

Although the inverse placed Cassegrain telescope 20 was used as the relay optics in the above-described preferred embodiments, an inverse placed telescope as shown in Fig. 4 and Fig. 5 may be used in place of this inverse placed Cassegrain telescope 20.

That is to say, referring to Fig. 4 showing the preferred embodiment using an inverse placed Gregorian telescope 30 as the relay optics, this inverse placed Gregorian telescope 30 is composed of a main mirror 31 comprising a concave mirror surface having a positive focal distance and of a secondary mirror 32 comprising a concave mirror surface with a positive focal distance. Said main mirror 31 is provided with an opening 33 formed in a central portion thereof and faces its concave mirror surface in the direction opposite to the Cassegrain objective 1. In addition, said secondary mirror 32 is placed at a position slightly closer to a paraboloid mirror 24 from a focal position of the main mirror 31 so as to face its concave mirror surface to the concave mirror surface of the main mirror 31 and the Cassegrain objective 1.

Furthermore, referring to Fig. 5 showing the preferred embodiment using an inverse placed Newton telescope 40 as the relay optics, this inverse placed Newton telescope 40 is composed of a main mirror 41 comprising a concave mirror surface having a positive focal distance and of a secondary mirror 42 comprising a flat mirror. Said secondary mirror 42 is placed diagonally to the optical axis 11 so as to face a mirror surface thereof to the secondary mirror 5 of a Cassegrain objective 1. In addition, the concave mirror surface of said main mirror 41 is arranged in parallel to said optical axis 11 so as to guide a beam from the secondary mirror via the paraboloid mirror 24 to the detecting element 8.

The operation of the microscopic spectrometer shown in the above described Fig. 4 and Fig. 5 is the same as that of the microscopic spectrometer shown in Fig. 1, so that its description is omitted.

As above described, according to the present invention, an inverse placed telescope as a relay optics is placed behind an image plane of a Cassegrain objective and a paraboloid mirror for collecting a beam from said inverse placed telescope to focus into an image on a detecting element is provided so that such relations that a central obstruction ratio in said Cassegrain objective is larger than that in the inverse placed telescope, that a diameter of an image of a pupil of the Cassegrain objective projected on a secondary mirror as a pupil of the inverse placed telescope or smaller, and that an image of a beam-masking diameter of the Cassegrain objective projected on the secondary mirror as said pupil of the inverse placed telescope being same as a beam-masking diameter of the inverse placed telescope or larger, may hold good between the Cassegrain objective and the inverse placed telescope, so that not only a beam from the object existing on the optical axis but also a beam from the object, which does not exist on the optical axis, can be efficiently transmitted to said detecting element. Further, a synthetic focal distance from two mirrors composing the inverse placed telescope is long but an optical path length itself is short, so that a distance between the Cassegrain objective and the inverse placed telescope is reduced and thus the microscopic spectrometer can be miniaturized. Accordingly, influences of the absorption of the beam from the Cassegrain objective by carbonic acid gas and steam within the air in the optical path can be still more reduced and thus a highly accurate measurement can be achieved.

The above mentioned "central obstruction ratio" is defined as follows:
an area of the portion shown by the mark B ÷ an area of the portion shown by the mark A in Figs. 2(a) and 3(a)
or
an area of the portion shown by the mark D ÷ an area of the portion shown by the mark C in Figs. 2(b) and 3(b).

## Claims

1. A microscopic spectrometer comprising a Cassegrain objective (1) **characterized by** an inverse placed telescope (20, 30, 40) with a secondary mirror (22, 32, 42) placed behind an image plane (12) of said Cassegrain objective (1), a paraboloid mirror (24) for focusing the parallel beam from said inverse placed telescope (20, 30, 40) into an image, and by a defecting element (8) for detecting the focussed image, wherein the central obstruction ratio of said Cassegrain objective (1) is larger than that of said inverse placed telescope (20, 30, 40), wherein the diameter of the image of the pupil of said Cassegrain objective (1) projected on said secondary mirror (22, 32, 42) is equal to or less than the diameter of said secondary mirror (22, 32, 42), and wherein the image of the beam-masking diameter of said Cassegrain objective (1) projected on said secondary mirror (22, 32, 42) is greater than or equal to the beam-masking diameter of said inverse placed telescope (20, 30, 40).

2. The microscopic spectrometer as claimed in claim 1, **characterized in that** said inverse placed telescope is any one of a inverse placed Cassegrain telescope (20), an inverse placed Gregorian telescope (30) and an inverse placed Newton telescope (40).

## Patentansprüche

1. Mikroskop-Spektrometer mit einem Cassegrain-Objektiv (1), **gekennzeichnet durch** ein umgekehrt angeordnetes Teleskop (20, 30, 40) mit einem Sekundärspiegel (22, 32, 42), der hinter der Bildebene (12) des Cassegrain-Objektivs (1) angeordnet ist; einem Parabolspiegel (24) zum Fokussieren des parallelen Strahlenbündels vom umgekehrt angeordneten Teleskop (20, 30, 40) in ein Bild; und ein Meßelement (8) zum Messen des fokussierten Bilds, wobei das Hindernisverhältnis in der Mitte des Cassegrain-Objektivs (1) größer ist als dasjenige des umgekehrt angeordneten Teleskops (20, 30, 40), wobei der Durchmesser des Bilds der Pupille des Cassegrain-Objektivs (1), wie es auf den Sekundärspiegel (22, 32, 42) projiziert wird, gleich groß ist wie der Durchmesser des Sekundärspiegels (22, 32, 42) oder kleiner, und wobei das Bild des strahlausblendenden Durchmessers des Cassegrain-Objektivs (1), wie es auf den Sekundärspiegel (22, 32, 42) projiziert wird, größer ist als oder gleich groß ist wie der strahlausblendende Durchmesser des umgekehrt angeordneten Teleskops (20, 30, 40).

2. Mikroskop-Spektrometer nach Anspruch 1, **dadurch gekennzeichnet, daß** das umgekehrt angeordnete Teleskop ein umgekehrt angeordnetes Cassegrain-Teleskop (20), ein umgekehrt angeordnetes Gregory-Teleskop (30) oder ein umgekehrt angeordnetes Newton-Teleskop (40) ist.

## Revendications

1. Un spectromètre microscopique comprenant un objectif de TYPE Cassegrain (1), caractérisé en ce qu'il comprend un téléscope (20, 30, 40) placé à l'envers et présentant un miroir secondaire (22, 32, 42) disposé derrière un plan image (12) dudit objectif de Cassegrain (1), un miroir en forme de paraboloide (24) pour focaliser le faisceau parallèle provenant dudit télescope placé à l'envers (20, 30, 40) afin de former une image et un élément de détection (8) destiné à détecter l'image focalisée, dans lequel le rapport central d'obstruction dudit objectif de type Cassegrain (1) est plus important que celui dudit télescope placé à l'envers (20, 30, 40), dans lequel le diamètre de l'image de la pupille dudit objectif de Cassegrain (1) projeté sur ledit miroir secondaire (22, 32, 42) est inférieur ou égal au diamètre dudit miroir secondaire (22, 32, 42), et dans lequel l'image du diamètre de masquage de faisceau dudit objectif de Cassegrain (1) projeté sur ledit miroir secondaire (22, 32, 42) est supérieur ou égal au diamètre de masquage d'image dudit télescope monté à l'envers (20, 30, 40).

2. Le spectromètre microscopique selon la revendication 1, caractérisé en ce que ledit télescope placé à l'envers et choisi parmi un télescope de type Cassegrain monté à l'envers (20), un télescope Grégorien monté à l'envers (30), et un télescope de Newton monté à l'envers (40).
